# EUROPEAN PATENT APPLICATION

(11) **EP 4 706 927 A1**
(43) Date of publication of application: **11.03.2026**
(21) Application number: 25200014.6
(22) Date of filing: 03.09.2025
(51) Int. Cl.: B29C 33/48, B29C 33/30, B29C 33/76

(54) **MANDREL EXTRACTION SYSTEM AND METHOD**

(30) Priority: 04.09.2024 US 202418824398
(71) Applicant: RTX Corporation, Farmington, CT 06032 (US)
(72) Inventor: EHEANDER, Jonathan E., East Hartford, CT, 06118 (US); BANHOS, Jonas, East Hartford, CT, 06118 (US); ROACH, James T., East Hartford, CT, 06118 (US)
(74) Representative: Dehns

(57) **Abstract**

Systems and methods are disclosed for producing a hollow composite part, such as a CMC airfoil, using a segmented mandrel formed of individual mandrel segments. The individual mandrel segments may be dimensioned to permit extraction from highly twisted and/or curved parts. There is provided a system for producing a curved and/or twisted hollow composite part (100), comprising a first segment (20) of cavity mandrel (200) configured for a first portion of the composite part (100), the first segment (20) having a first opening (210) extending therethrough; and a second segment (20) of cavity mandrel (200) configured for a second portion of the composite part (100), the second segment having a second opening (210) extending therethrough that is substantially aligned with the first opening (210), wherein the second segment (20) is disposed adjacent to the first segment (20).

## Description

### TECHNICAL FIELD

The subject matter disclosed herein relates to mandrels used to produce composites such as Ceramic Matrix Composites (CMCs) and, in particular, to mandrels used to produce highly twisted and/or curved composite parts such as CMC airfoils.

### BACKGROUND

Many composites may be fabricated using a layup procedure wherein a prepreg fabric layup is wrapped or otherwise surrounds a mandrel that provides a rigid surface for forming the part. For example, CMC airfoil parts may be built with a CMC fabric via a layup procedure wherein the airfoil layup surrounds an appropriately-shaped mandrel to provide a rigid surface prior to the first stages of densification.

Indeed, airfoils often contain one or more cavities. For CMC parts such as airfoils that have cavities, it is desirable to use a mandrel to form such cavities. However, airfoil shapes are dictated by aerodynamic requirements that often require twisted and/or curved shapes. For metal airfoils, casting may be used to form twisted and/or curved airfoil parts. However, twisted and/or curved parts formed on a mandrel may make it difficult or impossible to extract the mandrel.

One solution to the mandrel extraction problem is the use of a mandrel materials that are substantially absorbed during thermal treatment of a preform to form the CMC part, as disclosed in U.S. Patent No. 10,450, 235 to Gray et al. However, in some cases, the fugitive material may interfere with the development of the CMC part during a chemical vapor deposition/infiltration process, increasing densification time and/or effectively contaminating the desired material of the CMC part. Additionally, as such mandrels are not reusable, this solution may involve waste and increased cost.

The above information disclosed in this Background section is only for understanding of the background of the inventive concepts and, therefore, it may contain information that does not constitute prior art.

### SUMMARY

The present disclosure is directed, in a first aspect, to a system for producing a curved and/or twisted hollow composite part. The system includes a first segment of cavity mandrel configured for a first portion of the composite part, the first segment having a first opening extending therethrough, and a second segment of cavity mandrel configured for a second portion of the composite part, the second segment having a second opening extending therethrough that is substantially aligned with the first opening, wherein the second segment is disposed adjacent to the first segment.

In an embodiment, the second segment of cavity mandrel may be extractable from the second portion of the composite part, and the first segment of cavity mandrel may be extractable from the first and second portions of the composite part.

In another embodiment, the first opening may have a first alignment member surrounding the first opening at a first end that is adjacent the second opening, the second opening may have a second alignment member surrounding the second opening at a second end that is adjacent the first opening, and first and second alignment members may be a complementary combination of a recess and a protrusion having a same shape.

In a further embodiment, the recess and protrusion may have a polygonal shape.

In yet another embodiment, the recess and protrusion may have a rectangular shape.

In an embodiment, a depth of the recess may be greater than a height of the protrusion so as to form a gap.

In another embodiment, the first and second openings may be aligned keyways configured for passage of an extraction tool.

In a further embodiment, the gap may be configured to permit rotation of a distal end of the extraction tool and provide an extraction surface for the distal end of the extraction tool.

The present disclosure is directed, in a second aspect, to a system for producing a ceramic matrix composite (CMC) airfoil part, the CMC airfoil part having an airfoil cross-section in a first direction and extending in a second direction transverse to the first direction. The system of this embodiment includes a cavity mandrel dimensioned to form the CMC airfoil part, the cavity mandrel formed of a plurality mandrel segments dividing the cavity mandrel in the first direction and extending in the second direction. Each mandrel segment includes a keyway opening extending in the second direction between a distal face and a proximal face, a first alignment recess surrounding the keyway opening at the distal face, a second alignment recess spaced from the first alignment recess on the distal face, a first alignment protrusion surrounding the keyway opening at the proximal face and configured to mate with the first alignment recess, and a second alignment protrusion spaced from the first alignment protrusion on the proximal face and configured to mate with the second alignment recess. Further, a depth of the first alignment recess is greater than a height of the first alignment protrusion to form a gap, the keyway is configured for passage of an extraction tool, and the gap is configured to permit rotation of a distal end of the extraction tool and provide an extraction surface on the distal face for the distal end of the extraction tool.

In an embodiment of the CMC airfoil part, the cavity mandrel may twist and/or curve in the second direction, and each mandrel segment may be extractable from cavities formed by mandrel segments disposed proximal thereto.

In another embodiment of the CMC airfoil part, the first alignment recess and first alignment protrusion may have a polygonal shape.

In a further embodiment of the CMC airfoil part, the first alignment recess and first alignment protrusion may have a rectangular shape.

In yet another embodiment of the CMC airfoil part, the second alignment recess may be a blind hole and second alignment protrusion may be a lug.

In an embodiment of the CMC airfoil part, at least one of the first alignment recess and second alignment recess may be dimensioned for a friction fit with a corresponding one of the first alignment protrusion and second alignment protrusion, respectively.

The present disclosure is directed, in a third aspect, to a method for producing a hollow composite part. The method includes providing a cavity mandrel dimensioned to form the part, the cavity mandrel formed of a plurality mandrel segments dividing the cavity mandrel in a first direction and extending in a second direction transverse to the first direction, forming the hollow composite part on the cavity mandrel, and extracting at least one mandrel segment by: inserting an extraction tool from a proximal end into a keyway formed through the mandrel segment in the second direction, rotating the extraction tool to engage a distal surface of the mandrel segment extending in the first direction with a distal end of the extraction tool, and applying force to the extraction tool in the proximal direction to move the mandrel segment in a proximal direction for extraction from the part.

In an embodiment of the method, providing the cavity mandrel may include connecting the plurality of mandrel segment to each other by interconnecting a protrusion surrounding the keyway at a proximal surface of one mandrel segment with a deeper corresponding recess surrounding the keyway at the distal surface of another mandrel segment so as to form a gap.

In another embodiment of the method, the distal end of the extraction tool may be rotated within the gap to engage the distal surface of the mandrel segment.

In a further embodiment, the method may also include providing an alignment protrusion on the proximal surface and an alignment recess on the distal surface of a plurality of mandrel segments, and wherein providing the cavity mandrel may include connecting the plurality of mandrel segments to each other by interconnecting the alignment protrusions to the alignment recesses.

In yet another embodiment of the method, at least one of the recess and the alignment recess may be dimensioned for a friction fit with a corresponding one of the protrusion and alignment protrusion, respectively.

In an embodiment, the method may be for producing a ceramic matrix composite (CMC) airfoil part, the CMC airfoil part having an airfoil cross-section in the first direction and extending in the second direction, wherein the cavity mandrel twists and/or curves in the second direction, wherein forming the hollow composite part on the cavity mandrel includes densifying the CMC airfoil part, and each mandrel segment is extractable from cavities formed by mandrel segments disposed proximal thereto.

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
FIG. 1 is a first perspective view of an example of a hollow composite part or fabric layup in accordance with the present disclosure;
FIG. 2 is a second perspective view of the hollow composite part or fabric layup in accordance with the present disclosure;
FIG. 3 is a cutaway perspective view of the hollow composite part or fabric layup disposed on a segmented mandrel in accordance with the present disclosure;
FIG. 4 is a perspective view of a proximal surface of a mandrel segment in accordance with the present disclosure;
FIG. 5A is an exploded perspective view of two adjacent mandrel segments in accordance with the present disclosure;
FIG. 5B is an assembled perspective view of two adjacent mandrel segments in accordance with the present disclosure;
FIG. 6 is a cutaway perspective view of a mandrel segment being extracted in accordance with the present disclosure;
FIGS. 7A and 7B are plan views of an extraction tool operating on a distal surface of recess of a mandrel segment in accordance with the present disclosure; and
FIG. 8 is a flow diagram of a process of forming a hollow composite part in accordance with the present disclosure.

### DETAILED DESCRIPTION

The embodiments of the present disclosure can comprise, consist of, and consist essentially of the features and/or steps described herein, as well as any of the additional or optional elements, components, steps, or limitations described herein or would otherwise be appreciated by one of skill in the art.

The following discussion omits or only briefly describes conventional features of the disclosed technology that are apparent to those skilled in the art. Reference to various embodiments does not limit the scope of the claims attached hereto. Additionally, any examples set forth in this specification are intended to be non-limiting and merely set forth some of the many possible embodiments for the appended claims. Further, particular features described herein can be used in combination with other described features in each of the various possible combinations and permutations. A person of ordinary skill in the art would know how to use the instant invention, in combination with routine experiments, to achieve other outcomes not specifically disclosed in the examples or the embodiments.

Unless otherwise specifically defined herein, all terms are to be given their broadest possible interpretation including meanings implied from the specification as well as meanings understood by those skilled in the art and/or as defined in dictionaries, treatises, etc. Unless defined otherwise, all technical and scientific terms used herein have the same meaning as commonly understood by one of ordinary skill in the art in the field of the disclosed technology. It must also be noted that, as used in the specification and the appended claims, the singular forms "a," "an," and "the" include plural referents unless otherwise specified, and that the terms "includes" and/or "including," when used in this specification, specify the presence of stated features, elements, and/or components, but do not preclude the presence or addition of one or more other features, steps, operations, elements, components, and/or groups thereof. Additionally, methods, equipment, and materials similar or equivalent to those described herein can also be used in the practice or testing of the disclosed technology.

The devices of the present disclosure may be understood more readily by reference to the following detailed description of the embodiments taken in connection with the accompanying drawing figures, which form a part of this disclosure. It is to be understood that this application is not limited to the specific devices, methods, conditions or parameters described and/or shown herein, and that the terminology used herein is for the purpose of describing particular embodiments by way of example only and is not intended to be limiting. All spatial references, such as, for example, proximal, distal, horizontal, vertical, top, upper, lower, bottom, left and right, are for illustrative purposes only and can be varied within the scope of the disclosure. For example, the references "upper" and "lower" are relative and used only in the context to the other, and are not necessarily "superior" and "inferior."

It will further be understood that, although the terms "first," "second," "third," and the like may be used herein to describe various elements, these elements should not be limited by these terms. These terms are only used to distinguish one element from another element. Thus, "a first element" discussed below could be termed "a second element" or "a third element," and "a second element" and "a third element" may be termed likewise without departing from the teachings herein.

Various examples of the disclosed technology are provided throughout this disclosure. The use of these examples is illustrative only, and in no way limits the scope and meaning of the invention or of any exemplified form. Likewise, the invention is not limited to any particular preferred embodiments described herein. Indeed, modifications and variations of the invention may be apparent to those skilled in the art upon reading this specification, and can be made without departing from its spirit and scope. The invention is therefore to be limited only by the terms of the claims, along with the full scope of equivalents to which the claims are entitled.

The present disclosure is directed to systems and methods for producing a hollow composite part, such as a CMC airfoil, using a segmented mandrel that permits extraction of the segments from highly twisted and/or curved parts.

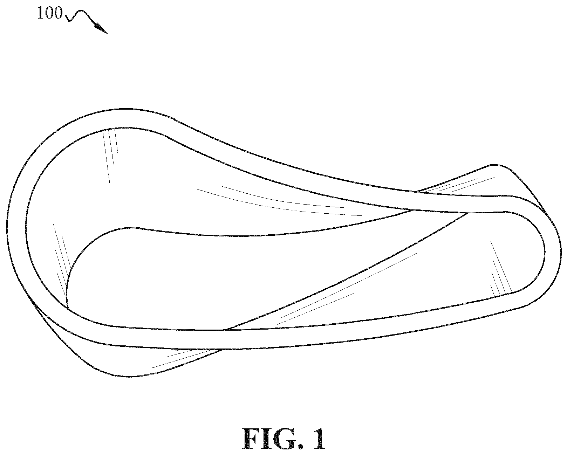

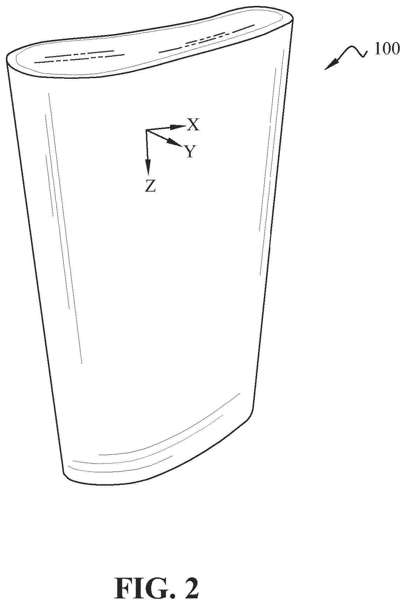

Referring to FIGS. 1 and 2, a composite part and/or its fabric layup (hereinafter alternately referred to as "part" or "preform" since they both refer to the same elements at various times during production) 100, such as for a hollow CMC airfoil, may be highly twisted and/or curved. In the illustrated embodiment, the part 100 includes an airfoil section in the X-Y plane defining a first direction substantially extending between a leading edge and a trailing edge of the airfoil. The airfoil of part 100 further extends substantially in the Z-direction in which it may twist and/or curve. This substantially Z-direction may define a second direction transverse to the first direction.

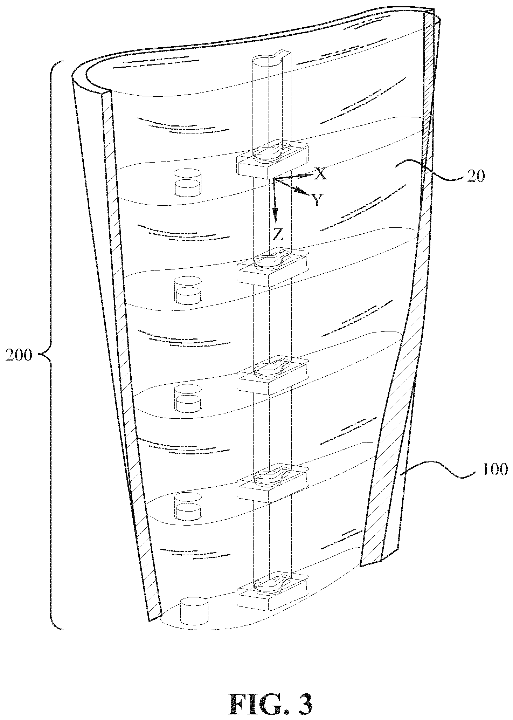

Referring to FIG. 3, an embodiment of a system for producing a curved and/or twisted hollow composite part may wrap a fabric layup of a preform 100 around a cavity mandrel 200. The cavity mandrel 200 is formed from a plurality of mandrel segments 20. Each mandrel segment 20 may be formed of material suitable for use with the composite being formed. For example, for producing a CMC part 100, mandrel segments 20 may be formed from graphite or other suitable materials, whereas for other composite parts 100, the mandrel segments 20 may be made from metal, such as stainless steel.

The number and thickness of each mandrel segment 20 may be varied based upon the complexity of the shape of part 100. For parts 100 with increased complexity, the thickness of the mandrel segments 20 in the Z-direction may be decreased in order to allow the mandrel segments 20 to be extracted from the formed part 100, resulting in an increase in the number of mandrel segments 20 forming the cavity mandrel 200. For parts 100 with lower complexity, the thickness of the mandrel segments 20 in the Z-direction may be increased so long as the dimensions still allow the mandrel segments 20 to be extracted from the formed part 100, resulting in a decrease in the number of mandrel segments 20 forming the cavity mandrel 200.

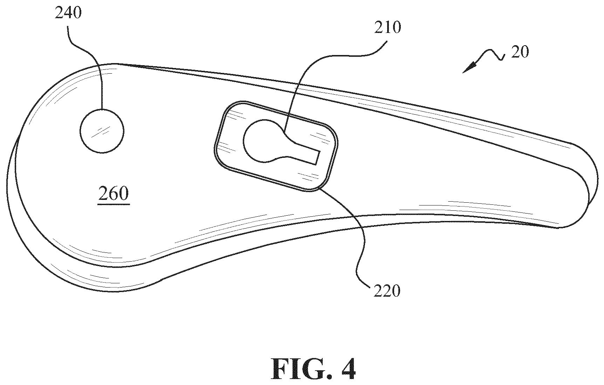

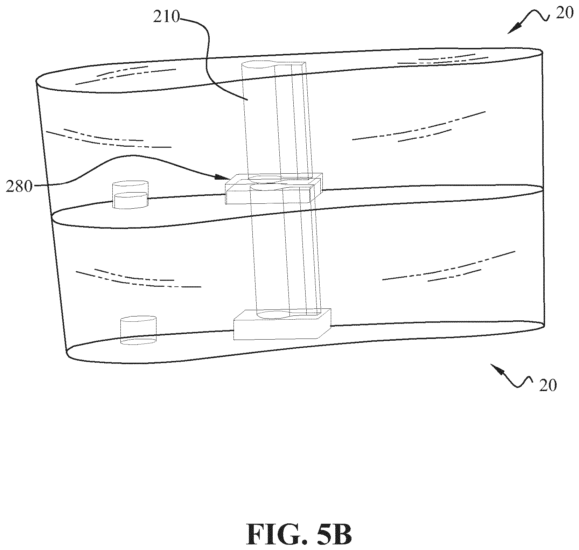

Referring to FIGS. 3, 4, 5A, and 5B, in one or more embodiments of the present disclosure, a first mandrel segment 20 of cavity mandrel 200 may be configured for a first portion of the composite part 100. The first segment 20 includes a first opening 210 extending therethrough, from a proximal surface 260 to a distal surface 270. Likewise, a second mandrel segment 20 of cavity mandrel 200 may be configured for a second portion of the composite part 100 adjacent the first portion of the composite part 100. The second segment 20 also includes a second opening 210 extending therethrough, from a proximal surface 260 to a distal surface 270, that is substantially aligned with the first opening 210 of the first mandrel segment 20. In the design of the segmented cavity mandrel 200, the second mandrel segment 20 is disposed adjacent to the first mandrel segment 20, as illustrated in FIG. 5B.

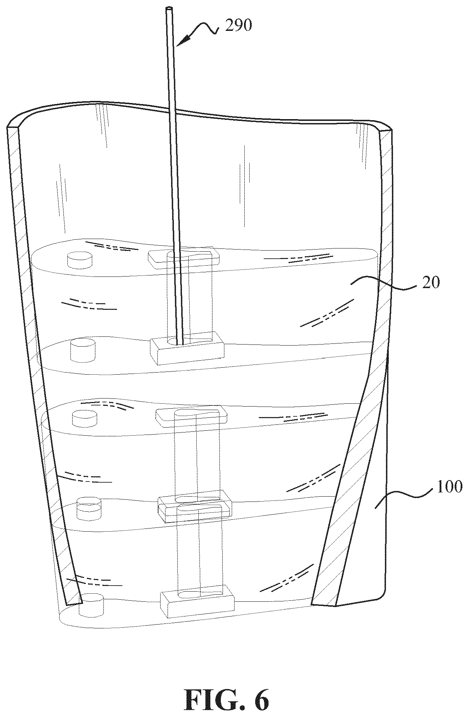

In order for a system in accordance with the present disclosure to permit extraction of the cavity mandrel 200 from the part 100 (see, e.g., FIG. 6), the mandrel segments 20 are designed to be extractable, which, as used herein, means that its outer dimensions will not interfere with the interior of the part when moved in a substantially proximal direction. For example, when the second mandrel segment is closer to a proximal end of the part 100 and the first mandrel segment 20 is located distally relative to the second mandrel segment 20, the second mandrel segment 20 of the cavity mandrel 200 may be dimensioned to be extractable from the second portion of the part 100, and the first mandrel segment 20 of cavity mandrel 20 may be dimensioned to be extractable from both the first and second portions of the part 100.

In one or more embodiments, the first opening 210 of the first mandrel segment 20 has a first alignment member 220 surrounding the first opening 210 at a first proximal end that is adjacent the second opening 210. Likewise, the second opening 210 of the second mandrel segment 20 has a second alignment member 230 surrounding the second opening 210 at a second distal end that is adjacent the first opening 210. The first alignment member 220 and second alignment member 230 are a complementary combination of a recess and a protrusion having a same shape. In the illustrated embodiment, the first alignment member 220 is a protrusion and the second alignment member 230 is a recess, but embodiments are not limited thereto and in other embodiments, the first alignment member 220 may be a recess and second alignment member 230 a complementary protrusion.

In one or more embodiments, alignment members 220, 230 may prevent relative rotation. For example, the recess and protrusion may have a polygonal shape, such as the substantially rectangular shape illustrated in FIGS. 3-7B.

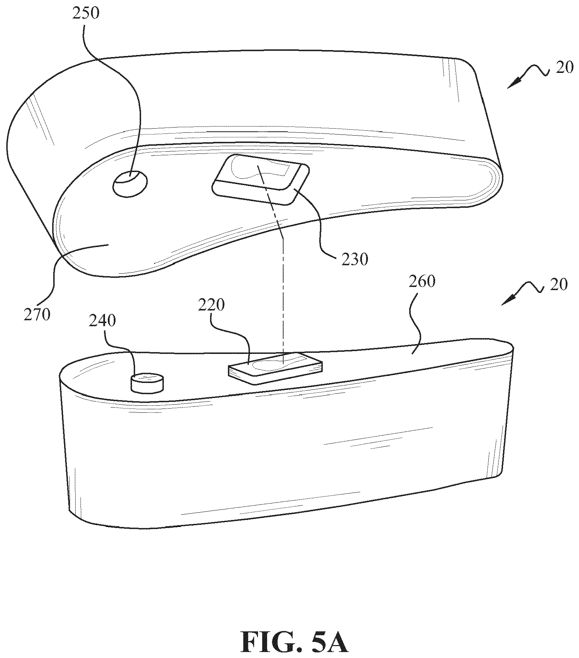

With reference to FIGS. 5A, 5B, 6, 7A, and 7B, in one or more embodiments of the present disclosure, a depth of the recess of second alignment member 230 may be greater than a height of the protrusion of first alignment member 220 so as to form a gap 280, as illustrated in FIG. 5B. The gap 280 may permit the use of an extraction tool 290. In such embodiments, the first and second openings 210 may be dimensions as aligned keyways 210 configured for passage of the extraction tool 290. For example, the openings/keyways 210 may have a keyhole shape, as shown in the illustrated embodiments.

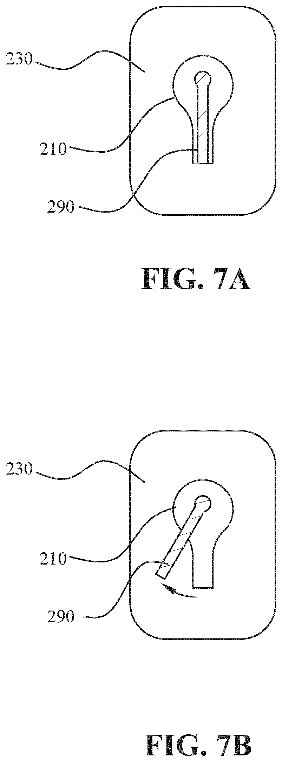

As illustrated in FIGS. 7A and 7B, the gap 280 is configured to permit rotation of a distal end of the extraction tool 290 and provide an extraction surface for the distal end of the extraction tool 290. Referring to FIG. 6, extraction tool 290 is illustrated being used for extraction of a mandrel segment 20 that is being moved in the proximal direction.

While general embodiments of the present disclosure have been presented with respect to composite parts, in one or more embodiments, the present disclosure relates more specifically to a system for producing a ceramic matrix composite (CMC) airfoil part 100. In particular, the CMC airfoil part 100 includes an airfoil cross-section in the X-Y plane defining a first direction substantially extending between a leading edge and a trailing edge of the airfoil. The airfoil part 100 further extends substantially in the Z-direction in which it may twist and/or curve. This substantially Z-direction may define a second direction transverse to the first direction.

In embodiments of this system, cavity mandrel 200 is dimensioned to form the CMC airfoil part 100. The cavity mandrel 200 is formed of a plurality mandrel segments 20 dividing the cavity mandrel 200 in the first direction and extending in the second direction, as illustrated in FIG. 3.

Referring again to FIGS. 3, 4, 5A, and 5B, each mandrel segment 20 includes a keyway opening 210 extending in the second direction between a distal face 270 and a proximal face 260. A first alignment recess 230 may surround the keyway 210 opening at the distal face 270 and a second alignment recess 250 may be spaced from the first alignment recess 230 on the distal face 270, as illustrated in FIG. 5A. Similarly, a first alignment protrusion 220 may surround the keyway 210 opening at the proximal face 260 and be configured to mate with the first alignment recess 230, and a second alignment protrusion 240 may be spaced from the first alignment protrusion 220 on the proximal face 260 and be configured to mate with the second alignment recess 250, as illustrated in FIGS. 5A and 5B.

In an embodiment, a depth of the first alignment recess 230 is dimensioned to be greater than a height of the first alignment protrusion 220 so as to form a gap 280, as illustrated in FIG. 5B. In this embodiment, the keyway 210 is configured for passage of an extraction tool 290, as illustrated in FIG. 6. Referring to FIGS. 5B, 7A, and 7B, the gap 280 is configured to permit rotation of a distal end of the extraction tool 290 to position the distal end of the extraction tool 290 on an extraction surface on the distal face 270 within recess 230.

Thus, in embodiments wherein the cavity mandrel 200 twists and/or curves in the second direction, each mandrel segment 20 in accordance with the present disclosure may be extractable from the cavities formed by mandrel segments 20 disposed proximal thereto, such as by using an extraction tool 290.

To assist in mandrel segment alignment and to provide a surface for the distal end of the extraction tool 290 to engage, the first alignment recess 230 and first alignment protrusion 220 may have a polygonal shape, such as a substantially rectangular shape. For example, when the extraction tool has an L-shaped distal end, the resulting rectangular gap 280 permits the distal end to rotate away from the keyway 210 and engage a distal surface 270 of the mandrel segment 20 within the first alignment recess 230, as illustrated in FIGS. 6, 7A, and 7B.

Referring to FIGS. 3, 4, 5A, 5B. and 6, the second alignment recess 250 may be a blind hole and second alignment protrusion 240 may be a lug. By including a second alignment member on the interfacing distal and proximal surfaces of the mandrel segments 20, alignment of the mandrel segments 20 may be assured when forming the cavity mandrel 200. In an embodiment, the position of the second alignment recess 250 and lug 240 relative to the position of the first alignment recess 230 and lug 220 may be slightly different for each individual interface such that a mistake in an order of the individual mandrel segments 20 making up the cavity mandrel 200 cannot be made during assembly.

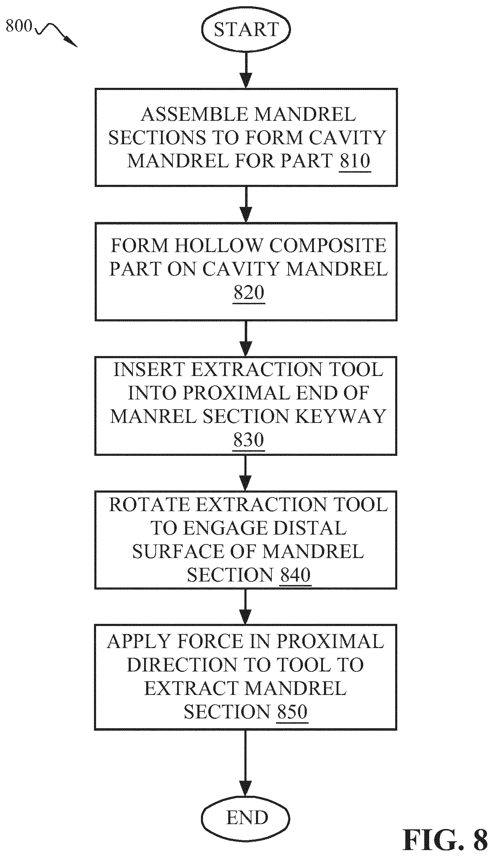

Referring to FIG. 8, an embodiment of method 800 for producing a hollow composite part is disclosed. To provide a cavity mandrel 200 dimensioned to form the part 100, the cavity mandrel 200 is formed of a plurality mandrel segments 20 dividing the cavity mandrel 200 in a first direction and extending in a second direction transverse to the first direction. Thus, as first step 810 of the method 800 is to assemble the plurality of mandrel sections 20 to form the cavity mandrel 200 for the part 100, which may be held together with a friction fit and/or a compatible adhesive between mandrel segments 20. In an embodiment, providing the cavity mandrel 200 includes connecting the plurality of mandrel segments 20 to each other by interconnecting a protrusion 220 surrounding the keyway 210 at a proximal surface 260 of one mandrel segment 20 with a deeper corresponding recess 230 surrounding the keyway 210 at the distal surface 270 of another mandrel segment 20 so as to form a gap 280, as illustrated in FIGS. 5A and 5B.

Forming the hollow composite part 100 on the cavity mandrel 200 is a next step 820 of method 800. This step 820 may involve multiple individual steps depending on the type of composite part being formed, such as, but not limited to, wrapping a prepreg fabric or wrapping or braiding a fabric layup of a preform onto the cavity mandrel 200, heating, infiltrating or melting, and cooling steps.

Method 800 then moves to extracting at least one mandrel segment 20 by performing multiple steps. A first step 830 includes inserting an extraction tool 290 from a proximal end into a keyway 210 formed through the mandrel segment 20 in the second direction.

In a next step 840, method 800 includes rotating the extraction tool 290 to engage a distal surface 270 of the mandrel segment 20 extending in the first direction with a distal end of the extraction tool 290. For example, the extraction tool may be L-shaped to fit within keyway 210 and rotate within gap 280, as discussed above with respect to FIGS. 7A and 7B.

A final step 850 of extracting the mandrel segment 20 includes applying force to the extraction tool 290 in the proximal direction to move the mandrel segment 20 in a proximal direction for extraction from the part 100, as illustrated in FIG. 6.

In one embodiment with respect to a CMC airfoil part having an airfoil cross-section in the first direction and extending in the second direction, method 800 may be applied wherein the cavity mandrel 200 at step 810 has twists and/or curves in the second direction, wherein forming the hollow composite part 100 on the cavity mandrel 20 at step 820 includes densifying the CMC airfoil part 100, and steps 830, 840, and 850 may be performed on each mandrel segment 20, with each mandrel segment 20 being extractable from cavities formed by mandrel segments 20 disposed proximal thereto.

If sufficiently segmented, a segmented geometry of each mandrel segment 20 may be subject to reduced stress during extraction, enhancing the ability of mandrel segment 20 to be reused, even for highly curved and/or twisted part production.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope and spirit of the present disclosure.

## Claims

1. A system for producing a curved and/or twisted hollow composite part, comprising:
a first segment of cavity mandrel configured for a first portion of the composite part, the first segment having a first opening extending therethrough; and
a second segment of cavity mandrel configured for a second portion of the composite part, the second segment having a second opening extending therethrough that is substantially aligned with the first opening,
wherein the second segment is disposed adjacent to the first segment.

2. The system of claim 1, wherein the second segment of cavity mandrel is extractable from the second portion of the composite part, and
the first segment of cavity mandrel is extractable from the first and second portions of the composite part.

3. The system of claim 1 or 2, wherein:
the first opening has a first alignment member surrounding the first opening at a first end that is adjacent the second opening,
the second opening has a second alignment member surrounding the second opening at a second end that is adjacent the first opening, and
first and second alignment members are a complementary combination of a recess and a protrusion having a same shape.

4. The system of claim 3, wherein the recess and protrusion have a polygonal shape, or wherein the recess and protrusion have a rectangular shape.

5. The system of claim 3 or 4, wherein a depth of the recess is greater than a height of the protrusion so as to form a gap.

6. The system of claim 5, wherein the first and second openings are aligned keyways configured for passage of an extraction tool, optionally wherein the gap is configured to permit rotation of a distal end of the extraction tool and provide an extraction surface for the distal end of the extraction tool.

7. A system for producing a ceramic matrix composite (CMC) airfoil part, the CMC airfoil part having an airfoil cross-section in a first direction and extending in a second direction transverse to the first direction, the system comprising:
a cavity mandrel dimensioned to form the CMC airfoil part, the cavity mandrel formed of a plurality mandrel segments dividing the cavity mandrel in the first direction and extending in the second direction, wherein each mandrel segment includes:
a keyway opening extending in the second direction between a distal face and a proximal face;
a first alignment recess surrounding the keyway opening at the distal face;
a second alignment recess spaced from the first alignment recess on the distal face;
a first alignment protrusion surrounding the keyway opening at the proximal face and configured to mate with the first alignment recess;
a second alignment protrusion spaced from the first alignment protrusion on the proximal face and configured to mate with the second alignment recess,
wherein:
a depth of the first alignment recess is greater than a height of the first alignment protrusion to form a gap,
the keyway is configured for passage of an extraction tool, and
the gap is configured to permit rotation of a distal end of the extraction tool and provide an extraction surface on the distal face for the distal end of the extraction tool.

8. The system of claim 7, wherein the cavity mandrel twists and/or curves in the second direction, and
each mandrel segment is extractable from cavities formed by mandrel segments disposed proximal thereto.

9. The system of claim 7 or 8, wherein the first alignment recess and first alignment protrusion have a polygonal shape, or wherein the first alignment recess and first alignment protrusion have a rectangular shape.

10. The system of any of claims 7 to 9, wherein the second alignment recess is a blind hole and second alignment protrusion is a lug, and/or wherein at least one of the first alignment recess and second alignment recess is dimensioned for a friction fit with a corresponding one of the first alignment protrusion and second alignment protrusion, respectively.

11. A method for producing a hollow composite part, comprising:
providing a cavity mandrel dimensioned to form the part, the cavity mandrel formed of a plurality mandrel segments dividing the cavity mandrel in a first direction and extending in a second direction transverse to the first direction;
forming the hollow composite part on the cavity mandrel;
extracting at least one mandrel segment by:
inserting an extraction tool from a proximal end into a keyway formed through the mandrel segment in the second direction,
rotating the extraction tool to engage a distal surface of the mandrel segment extending in the first direction with a distal end of the extraction tool, and
applying force to the extraction tool in the proximal direction to move the mandrel segment in a proximal direction for extraction from the part.

12. The method of claim 11, wherein providing the cavity mandrel includes connecting the plurality of mandrel segment to each other by interconnecting a protrusion surrounding the keyway at a proximal surface of one mandrel segment with a deeper corresponding recess surrounding the keyway at the distal surface of another mandrel segment so as to form a gap, optionally wherein the distal end of the extraction tool is rotated within the gap to engage the distal surface of the mandrel segment.

13. The method of claim 11 or 12, further comprising providing an alignment protrusion on the proximal surface and an alignment recess on the distal surface of a plurality of mandrel segments, and wherein providing the cavity mandrel includes connecting the plurality of mandrel segments to each other by interconnecting the alignment protrusions to the alignment recesses.

14. The method of claim 13, wherein at least one of the recess and the alignment recess is dimensioned for a friction fit with a corresponding one of the protrusion and alignment protrusion, respectively.

15. The method of any of claims 11 to 14, wherein the method is for producing a ceramic matrix composite (CMC) airfoil part, the CMC airfoil part having an airfoil cross-section in the first direction and extending in the second direction,
wherein the cavity mandrel twists and/or curves in the second direction,
wherein forming the hollow composite part on the cavity mandrel includes densifying the CMC airfoil part, and
each mandrel segment is extractable from cavities formed by mandrel segments disposed proximal thereto.
